# EUROPÄISCHE PATENTSCHRIFT

(11) **EP 1 931 892 B1**
(45) Veröffentlichungstag und Bekanntmachung des Hinweises auf die Patenterteilung: **27.06.2012**
(21) Anmeldenummer: 06806045.8
(22) Anmeldetag: 05.10.2006
(51) Int. Cl.: F16F 15/12

(54) **DREHSCHWINGUNGSDÄMPFER MIT EINER ELASTISCHEN KUPPLUNG**
TORSIONAL VIBRATION DAMPER
AMORTISSEUR DE VIBRATIONS DE TORSION A COUPLEUR ELASTIQUE

(30) Priorität: 05.10.2005 DE 102005047802
(43) Veröffentlichungstag der Anmeldung: 18.06.2008
(73) Patentinhaber: Voith Turbo GmbH & Co. KG, 89522 Heidenheim (DE)
(72) Erfinder: GRESHAKE, Olaf, 70567 Stuttgart (DE); BECKER, Markus, 44388 Dortmund (DE)
(74) Vertreter: Dr. Weitzel & Partner
(86) Internationale Anmeldenummer: PCT/EP2006/009625
(87) Internationale Veröffentlichungsnummer: WO 2007/039298

(56) Entgegenhaltungen:
- EP-A- 1 122 527
- FR-A- 2 853 384
- FR-A1- 2 865 516

## Beschreibung

Die Erfindung betrifft Drehschwingungsdämpfer mit einer elastischen Kupplung, in welchem ein System zur Ermittlung von Funktions- und/oder Betriebsdaten für die elastische Kupplung integriert ist.

Drehschwingungsdämpfer mit elastischen Kupplungen sind in einer Vielzahl von Ausführungsformen bekannt. Die elastischen Kupplungen umfassen ein erstes mit einem Antrieb verbindbares Kupplungselement, ein zweites mit einem Abtrieb verbindbares Kupplungselement, wobei beide Kupplungselemente über Mittel zur Feder- und/oder Dämpfungskopplung miteinander verbunden sind. Die Kopplung erfolgt dabei derart, dass über die Mittel zur Feder- und/oder Dämpfungskopplung Drehmoment übertragbar ist und ferner erstes und zweites Kupplungselement in Umfangsrichtung gegeneinander begrenzt verdrehbar sind. Die Mittel zur Feder- und/oder Dämpfungskopplung können dabei im einfachsten Fall als elastische Elemente, beispielsweise in Form von Federeinheiten oder ein Elastomer, ausgeführt sein. Komplexere Systeme sind durch die Integration hydraulischer Dämpfungskomponenten charakterisiert. Dabei besteht die Aufgabe einer derartigen elastischen Kupplung im Antriebsstrang in der Reduzierung der von einer Antriebsmaschine erzeugten Drehschwingungen auf ein für den Antriebsstrang ertragbares Maß. Dies setzt jedoch die Funktionsfähigkeit der elastischen Kupplung voraus. Zur Überprüfung der Wirksamkeit werden daher sogenannte Drehschwingungsmessungen durchgeführt. Dazu werden sowohl der Verdrehwinkel, Drehbeschleunigungen oder Drehmomente gemessen, wobei man die besten Aussagen aus einer Drehmomentmessung erhält. Dazu werden den mit dem Antrieb und mit dem Abtrieb gekoppelten Komponenten der elastischen Kupplung Mittel zur Erfassung der Drehzahl, insbesondere in Form von Drehzahlsensoren, zugeordnet und aus der Differenz die entsprechenden Größen ermittelt. In Analogie erfolgt auch eine Verdrehwinkelmessung, wenn die Steifigkeit des verdrehten Bauteiles des Antriebsstranges bekannt ist.

Eine weiterhin bekannte Maßnahme ist die Applikation eines Bauteils mit bekannter Steifigkeit, beispielsweise das Rohr einer Gelenkwelle aus Stahl im Antriebsstrang zwischen Antriebsmaschine und Leistungsabnehmer mit Dehnungsmessstreifen. Da die zur Anbindung des Dehnungsmessstreifens in Frage kommenden Bauteile jedoch in der Regel nicht zum Lieferumfang des Herstellers der elastischen Kupplung gehören, muss die Drehschwingungsmessung an einem nicht zur elastischen Kupplung gehörigen Bauteil durchgeführt werden. Für Lieferanten von elastischen Kupplungen, die häufig für die Drehschwingungstauglichkeit des gesamten Antriebsstranges verantwortlich sind, ist dies jedoch ein erheblicher Nachteil, da auf nicht zum Lieferumfang gehörende Bauteile des Antriebsstranges zurückgegriffen werden muss. Darüber hinaus ist die Applikation eines derartigen Bauteils aufwendig und nach der Messung nicht mehr verwendbar. Die Messsignale müssen mit Hilfe einer Telemetrieanlage von einem drehenden Bauteil gesendet werden, wofür weitere Geräte vor Ort gebracht und angeordnet werden müssen. Insbesondere zeichnet sich diese Methode durch einen erheblichen Mehraufwand auf, so dass eine derartige Drehschwingungsmessung für die breite Anwendung zu kostspielig ist.

Eine weitere Möglichkeit ist die Erfassung der Drehzahl der primären und sekundären Teile der elastischen Kupplung. Aus diesen Signalen lassen sich bei bekannter Kupplungssteifigkeit durch mathematische Nachbehandlung die Drehmomente und Drehschwingungen ermitteln. Beispielsweise werden dazu die Schraubenköpfe der Flanschverschraubungen der elastischen Kupplung abgetastet. Ein wesentlicher Nachteil dieser Methode besteht jedoch darin, dass die benötigte Sensorik von einem Fachmann in einem bei jeder Messung anders gestalteten Umfeld montiert werden muss. Darüber hinaus müssen bei dieser Methode verschiedene Beschränkungen, insbesondere hinsichtlich der Frequenz und Winkelauflösung, in Kauf genommen werden. Auch hier zeichnet sich die beschriebene Methode durch einen erheblichen Mehraufwand aus, der für viele Anwendungen nicht vertretbar ist.

Das Dokument FR 2 853 384 A beschreibt eine Riemenscheibe, in welche eine elastische Kupplung integriert ist. Die Riemenscheibe wird durch einen Verbrennungsmotor angetrieben und soll dazu geeignet sein, die Winkelposition der Nabel zu ermitteln, um die Zündzeitpunkte des Verbrennungsmotors optimal einstellen zu können. Hierzu ist eine zweiteilige Vorrichtung vorgesehen, umfassend ein Codierelement und eine Ausleseeinheit. Das Codierelement in Form eines Magnetringes mit alternierender Polung ist in den elastischen Teil der Riemenscheibe integriert und läuft somit mit dieser um. Die Ausleseeinheit wird hingegen an einem ortsfesten Element gehalten, da es notwendig ist, dass sich das Codierelement relativ zu der Ausleseeinheit bewegt.

Die aus dem Dokument FR 2 853 384 A bekannten Merkmale sind im Oberbegriff von Anspruch 1 zusammengefasst.

Der Erfindung liegt daher die Aufgabe zugrunde, einen Drehschwingungsdämpfer mit einem System zur Erfassung von die Betriebsweise einer in den Drehschwingungsdämpfer integrierten elastischen Kupplung wenigstens mittelbar beschreibenden Größen derart zu entwickeln, dass das System zum einen in den Lieferumfang des Herstellers des Drehschwingungsdämpfers beziehungsweise der elastischen Kupplung integrierbar und nur auf dieses Element beschränkbar ist und ferner durch einen geringen konstruktiven, steuerungstechnischen und Kostenaufwand charakterisiert ist.

Die erfindungsgemäße Lösung ist durch die Merkmale des Anspruchs 1 charakterisiert. Vorteilhafte Ausgestaltungen sind in den Unteransprüchen beschrieben.

Das im Drehschwingungsdämpfer vorgesehene System zur Ermittlung von Betriebs- und/oder Funktionsdaten für eine elastische Kupplung, umfassend wenigstens ein erstes mit einem Antriebselement verbindbares Kupplungselement, ein zweites mit einem Abtrieb drehfest verbindbares Kupplungselement, die über Mittel zur Feder- und/oder Dämpfungskopplung miteinander wenigstens mittelbar verbunden sind, umfasst eine Einrichtung zur Erfassung wenigstens einer die Funktions- und/oder Betriebsweise der elastischen Kupplung wenigstens mittelbar beschreibenden Größe. Erfindungsgemäß ist die Einrichtung zur Erfassung wenigstens einer die Betriebsweise der elastischen Kupplung wenigstens mittelbar beschreibenden Größe in der elastischen Kupplung integriert. Diese Einrichtung umfasst dabei Mittel zur Aufnahme der Betriebsdaten und eine dauerhaft installierte Schnittstelle, umfassend Mittel zum Auslesen der die Betriebsweise der elastischen Kupplung wenigstens mittelbar beschreibenden Größen.

Der erfindungsgemäße Drehschwingungsdämpfer ist somit dadurch charakterisiert, dass die elastische Kupplung, insbesondere hochelastische Kupplung, selbst mit der entsprechenden Sensorik und Datenerfassung ausgerüstet ist. Der Lieferant eines derartigen Drehschwingungsdämpfers mit hochelastischer Kupplung braucht damit nicht auf fremde Teile im Antriebsstrang zurückgreifen. Die Datenerfassung an Bord macht jedes zusätzliche Messgerät zur Durchführung der Messung vor Ort überflüssig. Eine mit Sensorik und Datenerfassung ausgerüstete Kupplung kann vom Anwender selbst eingebaut werden. Die Kupplung startet und beendet die Messung selbständig. Es ist auch kein Messtechniker vor Ort erforderlich.

Die Messtechnik ist mit standardisierten Verbindungselementen in die Kupplung eingebaut. Dadurch kann sie nach Messung und Ausbau der Kupplung entnommen werden und in die nächste Kupplung eingebaut werden. Für diese Tätigkeit ist kein Messtechniker erforderlich. Durch die Wiederverwendbarkeit kann die teure Messtechnik auch mehrfach genutzt werden.

Die Mittel zur Aufnahme der Betriebsdaten sind dabei koaxial zur Rotationsachse der elastischen Kupplung angeordnet. Diese sind dabei entweder symmetrisch bezüglich der Rotationsachse R aufgebaut oder liegen direkt auf der Rotationsachse R. Bei den Mitteln zur Datenaufnahme handelt es sich um Geber. Diese sind im einfachsten Fall als Drehzahl- oder Fliehkraftsensoren ausgeführt.

Die Minimalkonfiguration der Einrichtung zur Erfassung wenigstens einer die Betriebsweise der elastischen Kupplung wenigstens mittelbar beschreibenden Größe umfasst neben den Mitteln zur Aufnahme der Betriebsdaten auch eine dauerhaft installierte Schnittstelle mit Mitteln zum Auslesen der die Betriebsweise der elastischen Kupplung wenigstens mittelbar charakterisierenden Größe. Dazu umfasst die Einrichtung ein Tragsystem, an welchem die Mittel zur Aufnahme der Daten bzw. der die Betriebsweise der elastischen Kupplung wenigstens mittelbar beschreibenden Größe gelagert sind. Das Tragsystem ist drehfest mit den Mitteln zur Feder- und/oder Dämpfungskopplung und einem der Kupplungselemente - erstes oder zweites Kupplungselement - verbunden. Das Tragsystem selbst kann dabei verschiedenartig ausgeführt sein. Vorzugsweise umfasst dies einen glockenförmigen Gehäuseteil, welcher die Mittel zur Aufnahme der die Betriebsweise der elastischen Kupplung wenigstens mittelbar beschreibenden Größen umschließt und ein scheibenförmiges Element, welches mit dem glockenförmigen Gehäuseteil zu einer baulichen Einheit zusammengefasst werden kann durch eine lösbare oder unlösbare Verbindung und das Tragsystem mit einem der beiden Kupplungselemente verbindet.

Bezüglich der Ausführung der Mittel zum Auslesen der die Betriebsweise der elastischen Kupplung wenigstens mittelbar beschreibenden Größen bestehen eine Vielzahl von Möglichkeiten. Im einfachsten Fall umfasst die Schnittstelle dazu eine Anschlusseinrichtung, welche über eine Leitungsverbindung mit einer externen Ausleseeinrichtung gekoppelt werden kann.

Gemäß einer besonders vorteilhaften Ausführung umfasst die Einrichtung zur Erfassung wenigstens einer die Betriebsweise der elastischen Kupplung wenigstens mittelbar beschreibenden Größe Mittel zur Datenübertragung. Die Ausführung der Mittel zur Datenübertragung hängt dabei von der Art und Weise der Datenübertragung und vom gewünschten und erforderlichen Zeitpunkt ab. Die Mittel zur Datenübertragung sind dabei im einfachsten Fall Bestandteil der Schnittstelle. Sie können auf unterschiedlichen Systemen basieren. Dabei wird grundsätzlich zwischen drahtloser Datenübertragung oder Datenübertragung über Verbindungsleitungen unterschieden. Die Mittel zur Datenübertragung umfassen dabei wenigstens eine Sendeeinrichtung. Über diese kann ein Aufbau der Verbindung entweder fortlaufend oder bei Bedarf erfolgen. Vorzugsweise ist auch wenigstens eine Empfangseinrichtung vorgesehen, über welche ein Verbindungsaufbau bei Bedarf möglich ist. Unter einem weiteren, besonders vorteilhaften Aspekt der Erfindung werden die Funktionen der Sende einrichtung zur Schaffung einer Komponente mit möglichst geringem Bauraumbedarf und hohem Grad an Standardisierung in einer baulichen Einheit zusammengefasst, welche vorzugsweise als Funkkommunikationseinrichtung ausgebildet ist. Andere Möglichkeiten der Datenübertragung basieren auf der Nutzung von Ultraschallsignalen oder Infrarotsignalen. Dementsprechend sind die Sender und eventuell auch Empfangseinrichtungen zu konzipieren.

Bezüglich der Auslösung des Aufbaus einer Verbindung bestehen eine Vielzahl von Möglichkeiten. Denkbar sind, wie bereits ausgeführt
a) eine ständige Verbindung oder
b) eine frei wählbar einstellbare Verbindung und/oder
c) eine bei notwendiger Erwartung erzwungene Herstellung der Verbindung.

Es werden vorzugsweise die unter b) und c) genannten Möglichkeiten eingesetzt. Im Fall a) erfolgt eine automatische Datenerfassung. Die Datenübertragung erfolgt bidirektional oder quasi bidirektional.

Im letztgenannten Fall erfolgt die Auslösung bei Vorliegen wenigstens einer der nachfolgend genannten Zustände:
- die elastische Kupplung benötigt eine Wartung, beispielsweise nach Ablauf eines bestimmten Zeitintervalls
- zeitweise, willkürlich oder in vordefinierten Zeitintervallen erfolgen die Übermittlung von Betriebsdaten
- Erkennen von kritischen Betriebszuständen der elastischen Kupplung im Vorfeld durch Änderung bestimmter, die Betriebs- und/oder Funktionsweise der elastischen Kupplung beschreibenden Größen
- im Über- oder Unterschreiten komponentenspezifischer Schwellenwerte, beispielsweise einer bestimmten Anzahl von Betriebszyklen etc..

Im Fall b) ist eine Auslösung der Verbindung beispielsweise denkbar bei
- gewünschter vorzunehmender Aktualisierung einer Steuersoftware für eine in der elastischen Kupplung integrierte Steuervorrichtung
- zeitweise Abfrage der die Funktionsweise der elastischen Kupplung charakterisierenden Daten durch den Hersteller oder anderer berechtigter Personen
- Abruf der in einer in der elastischen Kupplung integrierten Steuereinrichtung gespeicherten Daten.

Je nach Auswertverfahren und Vornahme der Auswertung der Betriebsdaten werden verschiedene Modifikationen unterschieden. Dabei kann als Kontroll- und/oder Auswertsystem beispielsweise die Fahrsteuerung fungieren, welche im Fahrzeug, in dem die elastische Kupplung integriert ist, vorgesehen ist. Denkbar sind jedoch auch externe Auswert- und/oder Kontrollsysteme, die beispielsweise vom Hersteller oder einem Wärtungsdienst betrieben werden und denen die entsprechenden Daten zur Verfügung gestellt werden können.

Gemäß einer besonders vorteilhaften Weiterentwicklung umfasst die Einrichtung zur Erfassung wenigstens einer die Betriebsweise der elastischen Kupplung wenigstens mittelbar charakterisierenden Größe eine Steuereinrichtung, welche mit den Mitteln zur Datenaufnahme gekoppelt ist und die entweder mit der Schnittstelle gekoppelt ist oder aber die Schnittstelle in dieser integriert ist. Gemäß einer besonders vorteilhaften Weiterentwicklung sind dabei die Mittel zur Datenübertragung ebenfalls in der Steuereinrichtung integriert.

Vorzugsweise umfasst die Steuereinrichtung ferner zumindest eine der nachfolgend genannten Komponenten für weitere Funktionen:
- eine Auswerteinrichtung
- eine Klassifizierungseinrichtung
- eine Vergleichseinrichtung
- Berechnungseinrichtungen.

Diese Einrichtungen dienen dabei bereits der Vorauswertung der erfassten Betriebsdaten, wobei die Auswertergebnisse dann nur noch übertragen werden müssen. Dies führt im Endeffekt zu einer Verminderung des erforderlichen Speicherplatzes, da lediglich nur noch die ausgewerteten Daten gespeichert werden müssen und nicht der gesamte Datenbestand.

Bezüglich der Anordnung der einzelnen Komponenten der Einrichtung zur Erfassung wenigstens einer die Betriebsweise der elastischen Kupplung wenigstens mittelbar beschreibenden Größe bestehen eine Mehrzahl von Möglichkeiten. Dabei können die einzelnen Komponenten vorzugsweise ringförmig ausgeführt sein und beispielsweise die Mittel zur Datenaufnahme umschließen oder aber die einzelnen Komponenten sind ringsegmentförmig ausgeführt oder aber beliebig und derart exzentrisch zur Rotationsachse angeordnet, dass diese um den Umfang der Mittel zur Datenaufnahme verteilt werden, wobei die Anordnung vorzugsweise derart erfolgt, dass der Schwerpunkt der gesamten Einrichtung zur Vermeidung von Unwuchten trotzdem auf der Rotationsachse der elastischen Kupplung liegt.

Die Einrichtung zur Erfassung wenigstens einer die Betriebsweise der elastischen Kupplung wenigstens mittelbar beschreibenden Größe ist lösbar mit der elastischen Kupplung verbunden. Vorzugsweise ist diese derart aufgebaut und konzipiert, dass diese in einer axialen Ebene mit den einzelnen Kupplungselementen der elastischen Kupplung liegt und im Bereich von deren axialer Erstreckung. Bezüglich des Auslesens der Daten kann die Einrichtung in der elastischen Kupplung verbleiben oder aber wird in ihrer Gesamtheit herausgenommen, ohne die Funktion der elastischen Kupplung zu stören.

Die Auswertung selbst kann, wie bereits ausgeführt, in einer in der elastischen Kupplung integrierten, das heißt insbesondere in der Einrichtung zur Erfassung wenigstens einer die Betriebsweise der elastischen Kupplung wenigstens mittelbar beschreibenden Größe erfolgen oder aber in einer einem externen Kontroll- und/oder Überwachungssystem, welches von Seiten des Herstellers oder einer zur Wartung berechtigten Person betrieben werden kann.

Der erfindungsgemäße Drehschwingungsdämpfer kann beispielsweise in Antriebssträngen mit Drehzahlen von bis 2500 Umdrehungen pro Minute oder auch mehr eingesetzt werden. Selbstverständlich kommen auch andere Drehzahlen in Betracht, beispielsweise geringere Drehzahlen bis zu 100 Umdrehungen pro Minute oder bis zu 10 Umdrehungen pro Minute. Ein Anwendungsbeispiel ist der Einsatz des Drehschwingungsdämpfers für dieselmotorische Antriebe, das heißt in dem Antriebsstrang, beispielsweise eines Kraftfahrzeugs, der einem Dieselmotor nachgeschaltet ist und von dem Dieselmotor angetrieben wird.

Die erfindungsgemäße Lösung wird nachfolgend anhand von Figuren erläutert. Darin ist im einzelnen folgendes dargestellt:
- Figuren 1a bis 1e: verdeutlichen in schematisch stark vereinfachter Darstellung das Grundprinzip und die Grundfunktionsweise eines erfindungsgemäß ausgeführten Drehschwingungsdämpfers mit einem System zur Erfassung der Betriebs- und/oder Funktionsweise der zur Dämpfung von Drehschwingungen und/oder Axialschwingungen vorgesehenen elastischen Kupplung;
- Figur 2: verdeutlicht eine besonders vorteilhafte Ausgestaltung einer Ausführung gemäß Figur 1b anhand eines Axialschnittes durch eine elastische Kupplung;
- Figur 3: verdeutlicht eine Weiterentwicklung gemäß Figur 2.

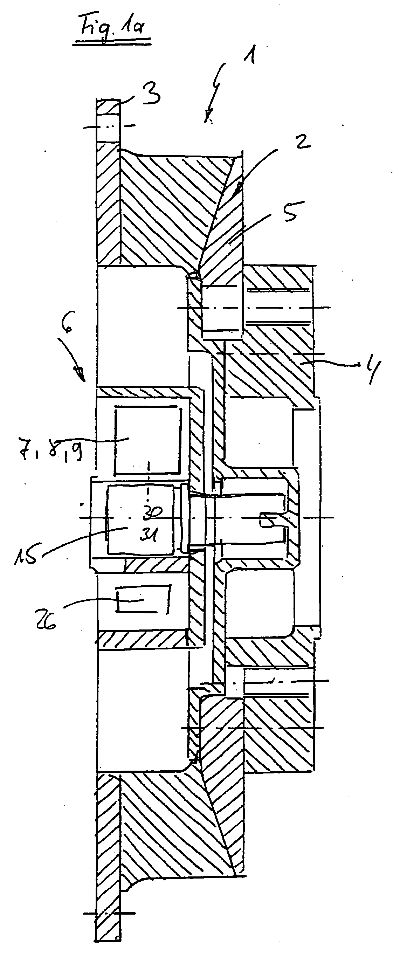

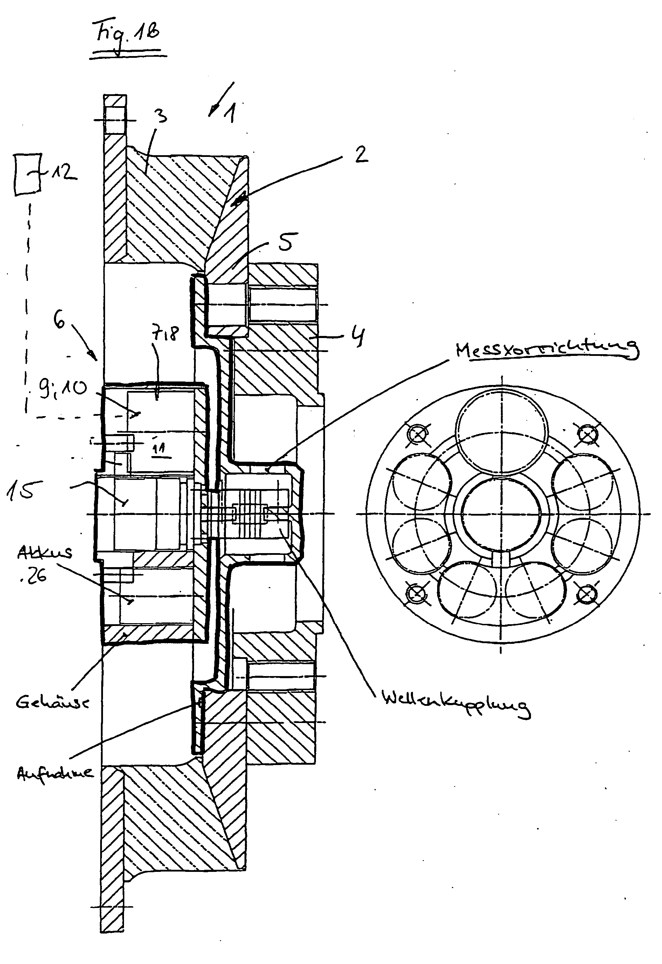

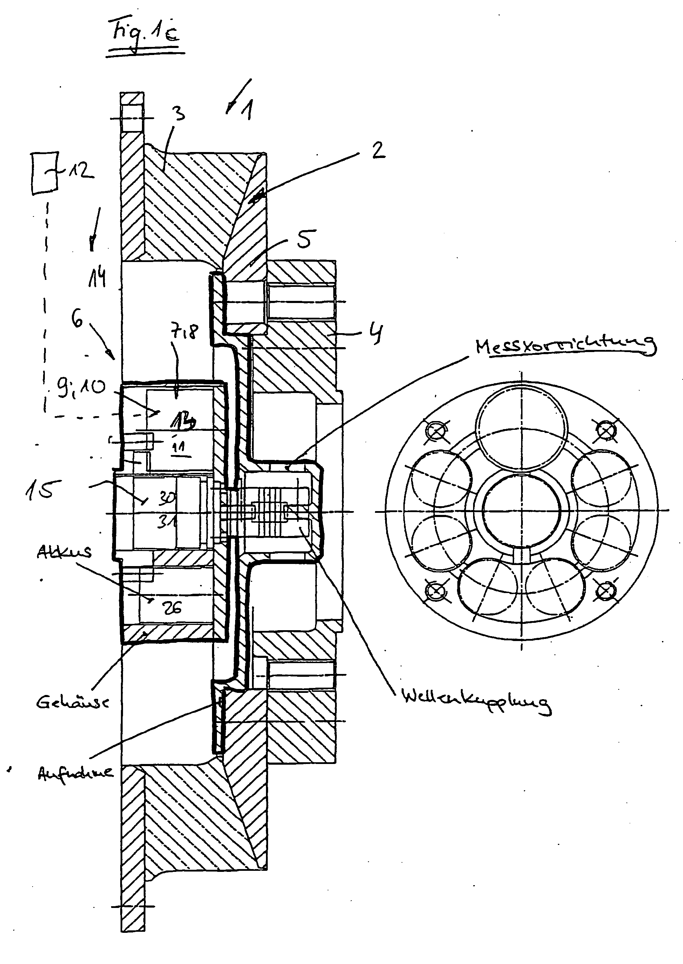

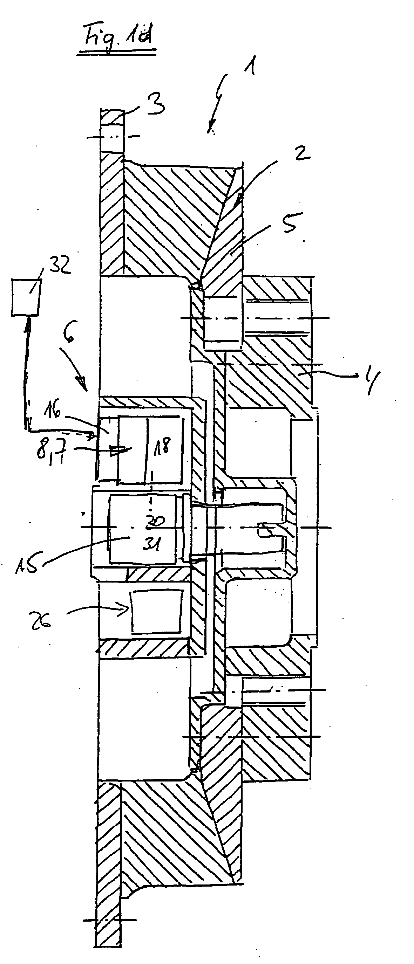

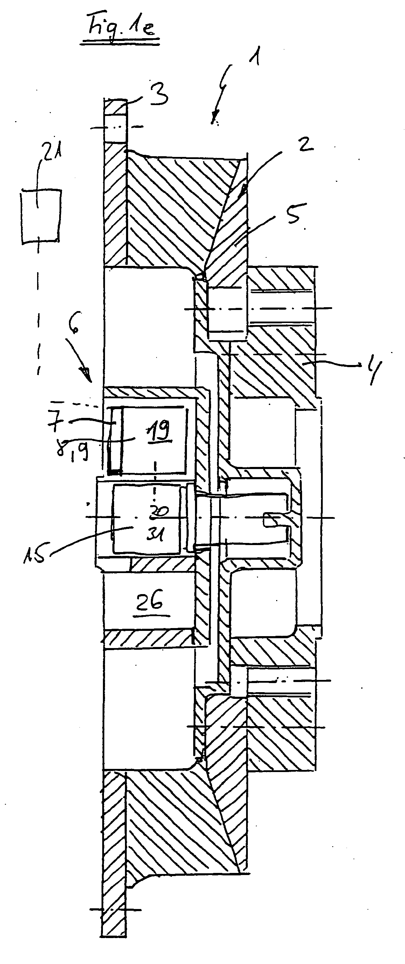

Die Figur 1 verdeutlicht in schematisch stark vereinfachter Darstellung den Grundaufbau eines erfindungsgemäß ausgeführten Drehschwingungsdämpfers. Dieser umfasst ein System 1 zu Ermittlung von Betriebsdaten für eine elastische Kupplung 2, umfassend wenigstens ein erstes, mit einem hier nicht dargestellten Antriebselement verbindbares Kupplungselement 3 und ein zweites, mit einem hier nicht dargestellten Abtrieb drehfest verbindbares Kupplungselement 4, welche über Mittel 5 zur Feder und/oder Dämpfungskopplung miteinander wenigstens mittelbar gekoppelt sind. Das System zur Ermittlung von Betriebsdaten 1 umfasst wenigstens eine Einrichtung 6 zur Erfassung wenigstens einer die Betriebsweise der elastischen Kupplung wenigstens mittelbar beschreibenden Größe. Wenigstens mittelbar bedeutet in diesem Zusammenhang, dass die entsprechenden, die Betriebsweise beschreibenden Größen entweder direkt erfasst werden oder aber indirekt über die Erfassung von Größen, welche mit denen, die Betriebsweise charakterisierenden Größen in direktem funktionalen Zusammenhang stehen und damit die die Betriebsweise charakterisierenden Größen ermittelt, beispielsweise durch Berechnung, werden können. Erfindungsgemäß ist die Einrichtung 6 zur Erfassung wenigstens einer die Betriebsweise der elastischen Kupplung wenigstens mittelbar beschreibenden Größe in der elastischen Kupplung 2 integriert. Die Einrichtung 6 umfasst Mittel 15 zur Aufnahme der die Betriebsweise der elastischen Kupplung 2 wenigstens mittelbar charakterisierenden Größe. Diese sind als Sensor oder Drehgeber ausgeführt. Erfindungsgemäß sind diese koaxial zur Rotationsachse R der elastischen Kupplung 2 angeordnet. Die Einrichtung 6 umfasst ferner eine Schnittstelle 7, umfassend Mittel 8 zum Auslesen der die Betriebsweise der elastischen Kupplung 2 wenigstens mittelbar beschreibenden Größen. Diese Mittel 8 können vielgestaltig ausgeführt sein. Je nach Vornahme des Auslesevorganges, zeitweise fortlaufend oder wahlweise, ist die Einrichtung modifiziert, ferner können die ausgelesenen Daten übertragen werden, welches über Mittel 9 zur Datenübertragung erfolgt. Die Datenübertragung selbst kann fortlaufend oder wahlweise nach Bedarf erfolgen, je nach dem ist die Schnittstelle 7 ausgestaltet. Figur 1a verdeutlicht dabei die Einrichtungen 7, 8, 9 als Blackbox.

Gemäß Figur 1b sind die Mittel 9 zur Datenübertragung als Mittel 10 zur drahtlosen Datenübertragung ausgeführt. Diese umfassen mindestens eine Sendeeinrichtung 11. Unter drahtloser Datenübertragung wird dabei jegliche Art der Datenübertragung verstanden, welche frei von einer festen Verkabelung zwischen einer Sende- und einer Empfangseinrichtung ist. Eine derartige Übertragung erfolgt vorzugsweise als Funkübertragung. Denkbar ist jedoch auch die Übertragung via Infrarot oder Ultraschall.

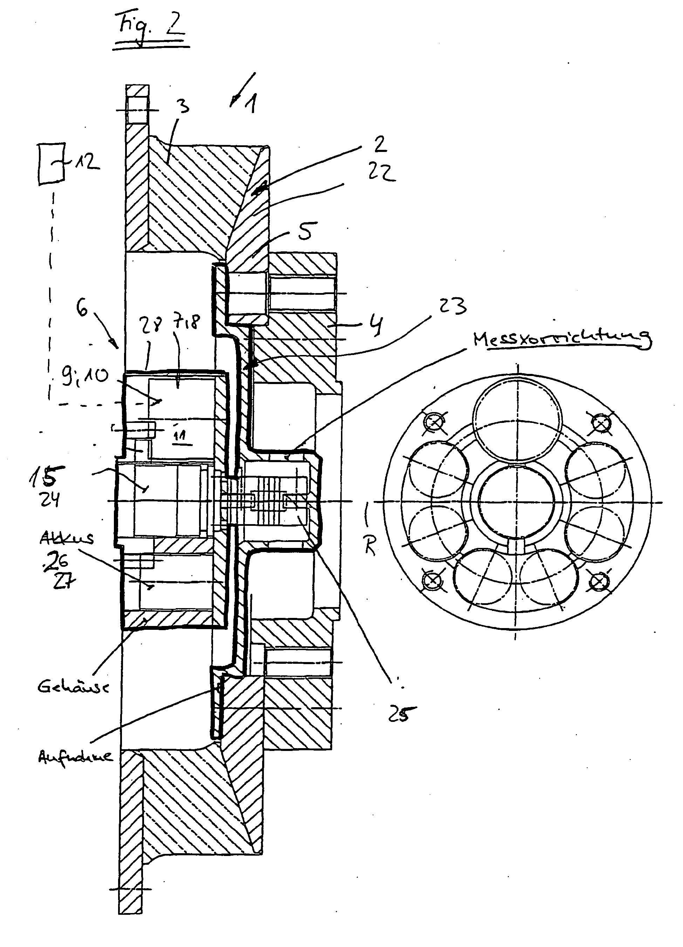

Gemäß Figur 1b kommuniziert die Sendeeinrichtung 11 beispielsweise mit einer externen Empfangseinrichtung 12. Die Datenübertragung zwischen Sendeeinrichtung 11 und Empfangseinrichtung 12 erfolgt in diesem Fall fortlaufend, das heißt bei Vorliegen der entsprechenden Daten in der Sendeeinrichtung 11 von den Mitteln 15. Um bei Bedarf die Sendeeinrichtung 11 auch ansteuern zu können, ist gemäß Figur 1c auch eine Empfangseinrichtung 13 in der elastischen Kupplung 3 integriert, wobei die Sendeeinrichtung 11 und die Empfangseinrichtung 13 hinsichtlich ihrer Funktionen in einer Baueinheit zusammengefasst sein können und vorzugsweise sind, wobei diese im dargestellten Fall beispielhaft in Form einer Telekommunikationseinrichtung 14 erfolgt. Dabei wird unter Telekommunikation eine Kommunikation zwischen Menschen, Maschinen und anderen Systemen mit Hilfe von nachrichtentechnischen Übertragungsverfahren verstanden. Kommunikationsformen sind Sprache, Text, Bild- und Datenkommunikation. Die Einrichtung 6 zur Datenerfassung umfasst des weiteren Mittel 15 zur Datenaufnahme und Übermittlung an die Mittel 10 zur drahtlosen Datenübertragung. Die Mittel 15 zur Datenaufnahme sind im einfachsten Falle als Geber 30 oder Sensor 31, beispielsweise in Form eines Drehzahlsensors oder Fliehkraftsensors ausgeführt. Entscheidend ist dabei die Integration dieser Mittel in der elastischen Kupplung 2, insbesondere im Bereich der Rotationsachse R der elastischen Kupplung 2, wie noch detailliert in der Figur 2 beschrieben.

Die in der Figur 1c dargestellte Ausführung mit integrierter Sendeeinrichtung 11 und Empfangseinrichtung 13 kommuniziert dabei beispielsweise ebenfalls mit einer externen Empfangseinrichtung 12. Eine weitere Möglichkeit ist in Figur 1d wiedergegeben. Auch hier umfasst die Einrichtung 6 zur Erfassung wenigstens einer die Betriebsweise der elastischen Kupplung 2 wenigstens mittelbar beschreibenden Größe eine Schnittstelle 7, wobei diese eine Anschlusseinrichtung 16 umfasst. Die Anschlusseinrichtung 16 ist mit den Mitteln zur Datenaufnahme 15 gekoppelt, wobei über die Anschlusseinrichtung 16 beispielsweise ein externes Auslesegerät 32 angeschlossen werden kann. Um eine Betriebsdatenerfassung über einen längeren Zeitraum zu ermöglichen und bezüglich des Auslesens der Daten unabhängig zu sein, umfasst dabei die Einrichtung 6 zur Erfassung wenigstens einer die Betriebsweise der elastischen Kupplung 2 wenigstens mittelbar beschreibenden Größe neben den Mitteln 15 zur Datenaufnahme auch eine Speichereinheit 18 zur wenigstens temporären Speicherung der über die Mittel 15 erfassten Betriebsdaten. Die Anschlusseinrichtung 16 ist dann mit der Speichereinheit 18 gekoppelt, so dass die Betriebsdaten hier ausgelesen werden können, wobei die Speichereinheit 18 wiederum mit den Mitteln 15 verbunden ist.

Gemäß einer besonders vorteilhaften Ausführung gemäß Figur 1e umfasst die Einrichtung 6 zur Erfassung wenigstens einer die Betriebsdaten wenigstens mittelbar beschreibenden Größe 6 eine Steuereinrichtung 19, umfassend mindestens eine Speichereinheit 18, wobei diese mit den Mitteln 15 zur Datenaufnahme gekoppelt ist. Die Schnittstelle 7 ist dann Bestandteil der Steuereinrichtung 19 gemäß einer besonders vorteilhaften Ausführung oder aber kann mit dieser gekoppelt sein, wobei über die Schnittstelle 7 das Auslesen der Daten erfolgt.

Die Schnittstelle 7 ist im letzten Fall mit der Steuereinrichtung 19 koppelbar. Die Kopplung erfolgt vorzugsweise elektronisch, wobei diese vorzugsweise über Mittel 20 zur seriellen Datenübertragung zwischen der Steuereinrichtung 19 und der Schnittstelle 7 realisiert wird. Denkbar ist auch der Einsatz von Mitteln zur parallelen Datenübertragung. In diesem Fall werden jedoch eine Mehrzahl von festen Leitungsverbindungen zwischen der Steuereinrichtung 19 und der Schnittstelle 7 erforderlich, welche eine Vielzahl von Anschlusseinrichtungen 16 an der Schnittstelle 7 erfordern würden. Über die Kopplung zwischen der Steuereinrichtung 19 und der Schnittstelle 7 können die die Betriebsweise der elastischen Kupplung 2 beschreibenden Größen der Schnittstelle 7 zur Verfügung gestellt werden, von welcher diese an entsprechende weitere Auswert- und/oder Überwachungs- und/oder Kontrollsysteme 21 oder zwischengeordnete, hier nicht dargestellte Vermittlungseinrichtungen übermittelt werden können. Bei den zu übermittelnden Größen kann es sich dabei beispielsweise um eine der nachfolgend genannten Größen handeln
- Größen, welche die Betriebsweise der elastischen Kupplung wenigstens mittelbar charakterisieren
- Größen, welche eine Änderung der Betriebs- und/oder der Funktionsweise der elastischen Kupplung wenigstens mittelbar charakterisieren
- Größen, welche die Funktionsweise und/oder den Zustand der elastischen Kupplung, insbesondere der Mittel 5 zur Feder- und/oder Dämpfungskopplung wenigstens mittelbar charakterisieren.

Dazu gehören u.a. Drehmomente, Drehzahlen, deren Änderungsverhalten über bestimmte Zeiträume, Drehschwingungsgrößen.

Bei Ausführungen mit Steuereinrichtung 19 können bereits Klassifizierungs- und/oder Auswertfunktionen der erfassten Größen in der Steuereinrichtung 19 vorgenommen werden. Dazu weist die Steuereinrichtung 19 entsprechende Auswert- und/oder Vergleichseinrichtungen auf.

Das Auswert- und/oder Überwachungs- und/oder Kontrollsystem 21 ist dabei beispielsweise in räumlicher Entfernung zur Schnittstelle 7 und damit zur elastischen Kupplung 2 angeordnet. Bei diesen kann es sich je nach Einsatzbedingung oder Anwendungsbereich um ein in den Wirkungsbereich des Herstellers der elastischen Kupplung oder des Betreibers der Endanwendung der elastischen Kupplung fallendes System handeln. Aufgrund der bevorzugt eingesetzten Möglichkeit der drahtlosen Datenübertragung ist es möglich, erhebliche Übertragungswege zu überbrücken, weshalb an den Standort des Auswert- und/oder Überwachungs- und/oder Kontrollsystems 21 keine besonderen Anforderungen zu stellen sind. Vorzugsweise ist dieses beim Hersteller der elastischen Kupplung angesiedelt. Denkbar ist jedoch auch, je nach Einsatzfall, diese Systeme beim Servicepersonal des Endabnehmers zu platzieren, wobei die möglichen Möglichkeiten der Datenfernübertragung optimal genutzt werden können.

Mit dieser Konfiguration können eine Vielzahl von unterschiedlichen Aufgaben gelöst werden. Zum einen ist es möglich, die Betriebsdaten bzw. die die Funktionsweise der elastischen Kupplung wenigstens mittelbar beschreibenden Größen einfach und schnell zu ermitteln. Die optimale Realisierung erfordert dann je nach Einsatzfall eine entsprechende Ausgestaltung der physikalischen und logischen Verbindung, insbesondere für den Aufbau der Übertragungsstrecke von der Schnittstelle 7 zum entsprechenden Auswert- und/oder Überwachungs- und/oder Kontrollsystem 21. Im einfachsten Fall erfolgt dies durch Entnahme der Einrichtung 6 zur Erfassung wenigstens einer die Betriebsweise der elastischen Kupplung 2 wenigstens mittelbar beschreibenden Größe und Auslesen der die Betriebsweise der elastischen Kupplung wenigstens mittelbar beschreibenden Größen bei Bedarf. In diesem Fall ist die Einrichtung 6 zur Erfassung wenigstens einer die Betriebsweise der elastischen Kupplung 2 wenigstens mittelbar beschreibenden Größe entsprechend Figur 2 als bauliche Einheit aus Geber- und Sendeeinrichtung 11 auszuführen. Anderenfalls kann ein Verbindungsaufbau nicht fortlaufend, sondern nur entsprechend des Bedarfs erfolgen, wobei die Einrichtung 6 in der elastischen Kupplung 2 integiert bleibt. Der Verbindungsaufbau kann dann auf unterschiedliche Art und Weise realisiert werden. Denkbar ist dabei die Auslösung des Verbindungsaufbaus, abhängig von wenigstens einer, den Zustand einer erforderlichen Wartung oder Diagnose der Komponente wenigstens mittelbar beschreibenden Größe oder unabhängig von einer erforderlichen Wartung zu beliebiger Zeit.

Im erstgenannten Fall erfolgt die Auslösung bei Vorliegen wenigstens einer der nachfolgend genannten Zustände:
a) Die elastische Kupplung benötigt eine Wartung, beispielsweise nach Ablauf eines bestimmten Zeitintervalls t der Betriebszeit.
b) bei Übermittlung von Betriebsdaten
c) Erkennen von kritischen Betriebszuständen der elastischen Kupplung im Vorfeld durch Änderung bestimmter, die Betriebs- und/oder Funktionsweise der elastischen Kupplung oder einzelner Komponenten dieser beschreibenden Größen

Im zweiten Fall ist eine Auslösung der Verbindung beispielsweise denkbar bei
d) zeitweiser Abfrage der die Funktionsweise der elastischen Kupplung durch den Hersteller oder die mit der Wartung betraute Serviceabteilung.

Der unter a) beschriebene Fall kann dabei beispielsweise durch eine der nachfolgend genannten Größen charakterisiert werden:
- Ablauf einer vordefinierten Zeitdauer t, welche als Wartungsintervall definiert ist und die die Abstände zwischen zwei Wartungsdurchgängen definiert
- Vorliegen einer, die Funktionsweise und/oder die Betriebsweise der elastischen Kupplung wenigstens mittelbar charakterisierenden Größe, welche außerhalb des Normalbereichs liegt
- starke Änderung der Betriebsdaten

Vorzugsweise wird jedoch eine Auslösung bei Problemen in der Funktionsweise oder der Erkennung von kritischen Zuständen der elastischen Kupplung angestrebt. Die andere Möglichkeit besteht darin, die Datenübertragung zwischen der Schnittstelle 7 und dem Auswert- und/oder Überwachungs- und/oder Kontrollsystem 21 jeweils nur auf ausdrücklichen Wunsch des Herstellers durch das Vorliegen einer entsprechenden, auf die Herstellung der Verbindung erzielenden Größe, beispielsweise eines entsprechenden Rufsignals, für eine Telekommunikationseinrichtung auszulösen. Wie bereits ausgeführt, erfolgt die Verbindung zwischen dem Auswert- und/oder Überwachungs- und/oder Kontrollsystem 21 und der Schnittstelle 7 über die Übertragungsstrecke vorzugsweise drahtlos oder über eine Leitungsverbindung. Bei drahtloser Datenübertragung kann die Verbindung beispielsweise über eine Funktelefonverbindung via GSM realisiert werden. Bei dieser Art der Verbindung handelt es sich um ein durch Schall vermitteltes Übertragungsverfahren, bei dem ein Übertragungskanal zwischen den beiden Teilnehmern fest aufgebaut wird. Eine weitere Möglichkeit zur Ausführung einer drahtlosen Direktverbindung besteht in der Nutzung von paketvermittelten Diensten, beispielsweise dem sogenannten GPRS. Bei diesem kann zwischen verbindungsorientierten und verbindungslosen Diensten unterschieden werden. Bei den von GPRS unterstützten Diensten wird zwischen den nachfolgend genannten unterschieden:
a) Point-to-Point-Diensten
b) Point-to-Multipoint-Diensten.

Andere Ausführungen sind denkbar.

Verdeutlichen die Figur 1a den Grundaufbau einer erfindungsgemäß erforderlichen Minimalkonfiguration sowie die Figuren 1b bis 1e Möglichkeiten der Erfassung und Weiterverarbeitung der Daten, zeigt Figur 2 eine besonders vorteilhafte Ausgestaltung einer Ausführung gemäß Figur 1b. Alle Ausführungen umfassen vorzugsweise eine integrierte Energieversorgungseinrichtung 26.

Die Figur 2 verdeutlicht anhand eines Axialschnittes durch eine elastische Kupplung 2 die Ausführung der Einrichtung 6 zur wenigstens mittelbaren Erfassung einer die Betriebsweise der elastischen Kupplung 2 wenigstens mittelbar beschreibenden Größe gemäß Figur 1b. Die elastische Kupplung 2 umfasst hier ein erstes Kupplungselement 3 und mindestens ein zweites Kupplungselement 4, die über Mittel 5 zur Feder- und/oder Dämpfungskupplung wenigstens mittelbar miteinander gekoppelt sind. Die Mittel 5 umfassen im dargestellten Fall mindestens ein elastisches Element, insbesondere ein Elastomer 22. Die Einrichtung 6 umfasst hier ein Tragesystem 23, welches wenigstens mittelbar drehfest mit der elastischen Kupplung 2 gekoppelt ist. Die Anordnung erfolgt in axialer Richtung betrachtet im Bereich der axialen Erstreckung der elastischen Kupplung 2 und im Bereich der Rotationsachse R. Vorzugsweise erfolgt die Anordnung der Mittel 15 zur Datenaufnahme, welche im dargestellten Fall in Form eines Drehgebers 24 ausgeführt sind, koaxial zur Rotationsachse R, das heißt in der Achse der elastischen Kupplung 2 liegend, das heißt in axialer Richtung in einer Ebene mit der axialen Erstreckung der elastischen Kupplung 2. Diese umschließt dazu einen Hohlraum, indem die einzelnen Kupplungselemente 3 und 4 als Hohlwellen ausgeführt sind. Im Hohlraum ist dann die Einrichtung 6 integriert. Dazu kann diese als Fliehkraftsensor oder aber Drehzahlsensor ausgeführt sein. Dieser Drehgeber ist mit dem Tragsystem 23 drehfest gekoppelt, während wiederum das Tragsystem 23 mit der elastischen Kupplung 2 drehfest verbunden ist. Die Kopplung des Drehgebers 24 mit dem Tragsystem 23 erfolgt im dargestellten Fall beispielsweise über eine Wellenkupplung 25. Andere Ausführungen sind denkbar. Die Wellenkupplung 25 ermöglicht jedoch ein leichtes Lösen und Verbinden. Ferner ist dem Drehgeber 24 eine Sendeeinrichtung 11 zugeordnet. Diese ist am Umfang des Drehgebers 24 vorzugsweise angeordnet, das heißt exzentrisch zur Rotationsachse R. Um den Betrieb der Sendeeinrichtung 11 zu gewährleisten, ist ferner eine Energieversorgungseinrichtung 26 in Form eines Akkus 27 vorgesehen, welcher ebenfalls am Tragsystem 23 angeordnet sind. Akku 27 und Sendeeinrichtung 11 sind derart aufgebaut und ausgeführt, dass bei mitrotierender Einrichtung der Schwerpunkt der Einrichtung 6 immer noch auf der Rotationsachse der Kupplung 2 liegt. Das Tragelement 23 umfasst dabei ein glockenförmiges Gehäuse 28, welches den Drehgeber 24 sowie die Energieversorgungseinrichtung 26 und die Sendeeinrichtung 11 in Umfangsrichtung umschließt bzw. hinsichtlich ihrer Lage fixiert. Dies gilt ferner für die Anordnung in axialer Richtung.

Das Tragsystem 23 umfasst des weiteren ein scheibenförmiges Element 29, welches mit der elastischen Kupplung 2 drehfest verbunden ist, insbesondere den Mitteln 5 zur Feder- und/oder Dämpfungskopplung und dem glockenförmigen Gehäuseteil 28. Denkbar ist es auch, den glockenförmigen Gehäuseteil 28 ortsfest zu belassen und nur den Geber 24 mit den rotierenden Elementen zu koppeln, wobei in diesem Fall das Tragsystem einen rotierenden und einen ruhenden Bestandteil umfasst, die beispielsweise über eine Drehdurchführung miteinander verbunden sind.

Das erste Kupplungselement 3 und das zweite Kupplungselement 4 sind in Umfangsrichtung relativ zueinander begrenzt verdrehbar. Über die Mittel 5 zur Feder- und/oder Dämpfungskopplung werden zum einen Drehmomente übertragen und ferner Drehschwingungen und Lageabweichungen der einzelnen Kupplungselemente 3, 4 voneinander kompensiert. Im dargestellten Fall erfolgt die drehfeste Anbindung der Einrichtung 6 über Befestigungselemente, beispielsweise schematisiert nur wiedergegeben über Schraubverbindungen an den Mitteln 5 zur Feder- und/oder Dämpfungskopplung 5 sowie dem zweiten Kupplungselement 4.

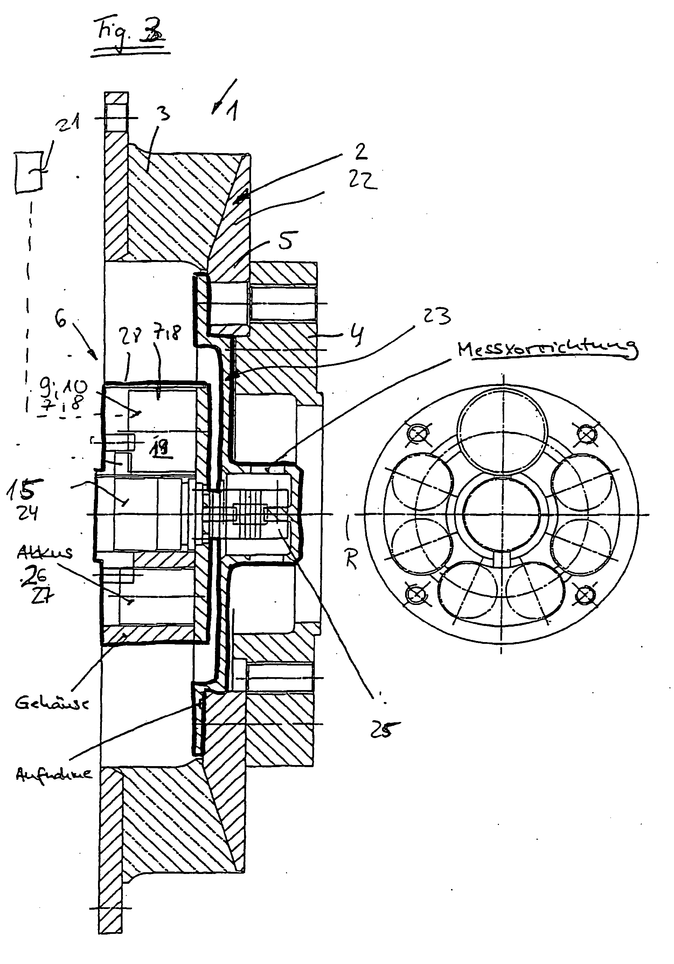

Die Figur 3 verdeutlicht demgegenüber eine Weiterentwicklung gemäß Figur 2. Bei dieser ist die Einrichtung zur Erfassung wenigstens die Betriebsweise der elastischen Kupplung wenigstens zwei wenigstens mittelbar beschreibenden Größen als Steuereinrichtung 19 ausgeführt. Diese umfasst die Mittel zur Datenaufnahme 15 sowie eine Speichereinheit 18 und eine Schnittstelle 7, über die das Auslesen der Daten erfolgt. In diesem Fall kann die gesamte Einrichtung in das Tragsystem 23 integriert sein und durch Herausnahme dieser aus der elastischen Kupplung 2 herausnehmbar sein.

### Bezugszeichenliste

- 1: System zur Ermittlung von Betriebsdaten
- 2: Elastische Kupplung
- 3: erstes Kupplungselement
- 4: zweites Kupplungselement
- 5: Mittel zur Feder- und/oder Dämpfungskopplung
- 6: Einrichtung zur Erfassung wenigstens einer die Betriebsweise der elastischen Kupplung wenigstens mittelbar beschreibenden Größe
- 7: Schnittstelle
- 8: Mittel zum Auslesen der die Betriebsweise der elastischen Kupplung wenigstens mittelbar beschreibenden Größen
- 9: Mittel zur Datenübertragung
- 10: Mittel zur drahtlosen Datenübertragung
- 11: Sendeeinrichtung
- 12: externe Empfangseinrichtung
- 13: Empfangseinrichtung
- 14: Telekommunikationseinrichtung
- 15: Mittel zur Datenaufnahme
- 16: Anschlusseinrichtung
- 17: externe Ausleseeinrichtung
- 18: Speichereinheit
- 19: Steuereinrichtung
- 20: Mittel zur seriellen Datenübertragung
- 21: Überwachungs- und/oder Kontrollsystem
- 22: elastisches Element
- 23: Tragsystem
- 24: Drehgeber
- 25: Wellenkupplung
- 26: Energieversorgungseinrichtung
- 27: Akku
- 28: glockenförmiges Gehäuse
- 29: scheibenförmiges Element
- 30: Geber
- 31: Sensor
- 32: Auslesegerät

## Patentansprüche

1. Drehschwingungsdämpfer mit einer elastischen Kupplung (2), umfassend wenigstens ein erstes mit einem Antriebselement verbindbares Kupplungselement (3), ein zweites mit einem Abtrieb drehfest verbindbares Kupplungselement (4), die über Mittel zur Feder- und/oder Dämpfungskopplung (5) miteinander wenigstens mittelbar gekoppelt sind;
1.1 mit einer Einrichtung (6) zur Erfassung wenigstens einer die Funktions- und/oder Betriebsweise der elastischen Kupplung (2) wenigstens mittelbar beschreibenden Größe;
**gekennzeichnet durch** die folgenden Merkmale:
1.2 die Einrichtung (6) zur Erfassung wenigstens einer die Betriebsweise der elastischen Kupplung wenigstens mittelbar beschreibenden Größe ist Vollständig in der elastischen Kupplung (2) integriert;
1.3 die Einrichtung (6) zur Erfassung wenigstens einer die Betriebsweise der elastischen Kupplung wenigstens mittelbar beschreibenden Größe umfasst Mittel (15) zur Aufnahme der Betriebsdaten und eine dauerhaft installierte Schnittstelle (7), umfassend Mittel (8) zum Auslesen der die Betriebsweise der elastischen Kupplung (2) wenigstens mittelbar beschreibenden Größen.

2. Drehschwingungsdämpfer nach Anspruch 1, **dadurch gekennzeichnet, dass** die Mittel (15) zur Aufnahme der Betriebsdaten koaxial zur Rotationsachse (R) der elastischen Kupplung (2) angeordnet sind.

3. Drehschwingungsdämpfer nach Anspruch 2, **dadurch gekennzeichnet, dass** die Mittel (15) zur Aufnahme der Daten auf der Rotationsachse (R) der elastischen Kupplung (2) angeordnet sind.

4. Drehschwingungsdämpfer nach einem der Ansprüche 1 bis 3, **dadurch gekennzeichnet, dass** die Mittel (15) zur Aufnahme der Betriebsdaten einen Geber (30) umfassen.

5. Drehschwingungsdämpfer nach Anspruch 4, **dadurch gekennzeichnet, dass** die Mittel (15) zur Aufnahme der Betriebsdaten einen Drehzahlsensor (31) umfassen.

6. Drehschwingungsdämpfer nach Anspruch 4, **dadurch gekennzeichnet, dass** die Mittel (15) zur Aufnahme der Betriebsweise einen Fliehkraftsensor umfassen.

7. Drehschwingungsdämpfer nach einem der Ansprüche 1 bis 6, **dadurch gekennzeichnet, dass** die Einrichtung (6) ein Tragsystem (23) aufweist, in welchem die Mittel (15) zur Aufnahme der Daten bzw. der die Betriebsweise der elastischen Kupplung (2) wenigstens mittelbar beschreibenden Größe integriert sind und welches drehfest mit den Mitteln zur Feder- und/oder Dämpfungskopplung (5) und einem der Kupplungselemente - erstes oder zweites Kupplungselement (3, 4) - verbunden ist.

8. Drehschwingungsdämpfer nach Anspruch 7, **dadurch gekennzeichnet, dass** das Tragsystem (23) einen glockenförmigen Gehäuseteil (29) aufweist, welches die Mittel (15) zur Aufnahme der die Betriebsweise der elastischen Kupplung (2) wenigstens mittelbar beschreibenden Größen umschließt und an dem diese gelagert sind und ein scheibenförmiges Element, welches den glockenförmigen Gehäuseteil (29) mit der elastischen Kupplung (2), insbesondere einem der beiden Kupplungselemente (3, 4), koppelt.

9. Drehschwingungsdämpfer nach einem der Ansprüche 1 bis 8, **dadurch gekennzeichnet, dass** die Mittel (8) zum Auslesen der die Betriebsweise der elastischen Kupplung (2) wenigstens mittelbar beschreibenden Größen eine Anschlusseinrichtung (16) zur Ankoppelung externer Ausleseeinrichtungen umfasst.

10. Drehschwingungsdämpfer nach einem der Ansprüche 1 bis 8, **dadurch gekennzeichnet, dass** die Einrichtung (6) zur Erfassung wenigstens einer die Betriebsweise der elastischen Kupplung wenigstens mittelbar beschreibenden Größe Mittel (10) zur Datenübertragung umfasst.

11. Drehschwingungsdämpfer nach Anspruch 10, **dadurch gekennzeichnet, dass** die Mittel (10) zur Datenübertragung Bestandteil der Schnittstelle (7) sind.

12. Drehschwingungsdämpfer nach Anspruch 10 oder 11, **dadurch gekennzeichnet, dass** die Mittel (10) zur Datenübertragung als Mittel zur drahtlosen Datenübertragung ausgeführt sind.

13. Drehschwingungsdämpfer nach Anspruch 10, **dadurch gekennzeichnet, dass** die Mittel zur drahtlosen Datenübertragung (10) wenigstens eine Sendeeinrichtung (11) umfassen.

14. Drehschwingungsdämpfer nach einem der Ansprüche 12 bis 13, **dadurch gekennzeichnet, dass** die Mittel (10) zur drahtlosen Datenübertragung von einer Funktelekommunikationseinrichtung (14) gebildet werden.

## Claims

1. A torsional vibration damper with a flexible coupling (2), comprising at least one first coupling element (3) which can be connected to a driving element, a second coupling element (4) which can be connected to a power take-off in a torsion-proof manner, said elements being at least indirectly coupled to each other via spring and/or damping coupling means (5);
1.1 with a device (6) for detecting at least one variable that is at least indirectly characteristic of the mode of functioning and/or operation of the flexible coupling (2);
**characterized by** the following features:
1.2 the device (6) for detecting at least one variable that is at least indirectly characteristic of the mode of operation of the flexible coupling is integrated completely in the flexible coupling (2);
1.3 the device (6) for detecting at least one variable that is at least indirectly characteristic of the mode of operation of the flexible coupling comprises means (15) for acquiring the operational data and a permanently mounted interface (7), comprising means (8) for reading out the variables that are at least indirectly characteristic of the mode of operation of the flexible coupling (2).

2. A torsional vibration damper according to claim 1, **characterized in that** the means (15) for acquiring the operational data are arranged coaxially to the rotational axis (R) of the flexible coupling (2).

3. A torsional vibration damper according to claim 2, **characterized in that** the means (15) for acquiring the data are arranged on the rotational axis (R) of the flexible coupling (2).

4. A torsional vibration damper according to one of the claims 1 to 3, **characterized in that** the means (15) for acquiring the operational data comprise a transducer (30).

5. A torsional vibration damper according to claim 4, **characterized in that** the means (15) for acquiring the operational data comprise a speed sensor (31).

6. A torsional vibration damper according to claim 4, **characterized in that** the means (15) for acquiring the mode of operation comprise a centrifugal sensor.

7. A torsional vibration damper according to one of the claims 1 to 6, **characterized in that** the device (6) comprises a support system (23) in which the means (15) are integrated for acquiring the data or the variable that is at least indirectly characteristic of the mode of operation of the flexible coupling (2) and which is connected in a torsion-proof manner to the spring and/or damping coupling means (5) and one of the coupling elements, the first or second coupling element (3, 4).

8. A torsional vibration damper according to claim 7, **characterized in that** the support system (23) comprises a bell-shaped housing part (29) which encloses the means (15) for acquiring the variable that is at least indirectly characteristic of the mode of operation of the flexible coupling (2) and on which they are held, and a disk-like element which couples the bell-shaped housing part (29) to the flexible coupling (2), especially one of the two coupling elements (3, 4).

9. A torsional vibration damper according to one of the claims 1 to 8, **characterized in that** the means (8) for reading out the variables that are at least indirectly characteristic of the mode of operation of the flexible coupling (2) comprise a connecting device (16) for coupling external readout devices.

10. A torsional vibration damper according to one of the claims 1 to 8, **characterized in that** the device (6) for acquiring at least one variable that is at least indirectly characteristic of the mode of operation of the flexible coupling (2) comprises means (10) for data transmission.

11. A torsional vibration damper according to claim 10, **characterized in that** the means (10) for data transmission are a component of the interface (7).

12. A torsional vibration damper according to claim 10 or 11, **characterized in that** the means (10) for data transmission are arranged as means for wireless data transmission.

13. A torsional vibration damper according to claim 10, **characterized in that** the means for wireless data transmission (10) comprise at least one transmission device (11).

14. A torsional vibration damper according to one of the claims 12 to 13, **characterized in that** the means (10) for wireless data transmission are formed by a radio telecommunications device (14).

## Revendications

1. Amortisseur de vibrations torsionnelles avec un accouplement élastique (2), comprenant
au moins un premier élément d'accouplement (3) pouvant être relié à un élément d'entraînement, un deuxième élément d'accouplement (4) pouvant être relié à un entraînement de manière solidaire en rotation, qui sont reliés au moins indirectement l'un à l'autre par des moyens de couplage de suspension et/ou d'amortissement (5) ;
1.1 avec un dispositif (6) pour acquérir au moins une grandeur décrivant au moins indirectement le mode de fonctionnement ou d'exploitation de l'accouplement élastique (2) ;
**caractérisé en ce que**
1.2 le dispositif (6) pour acquérir au moins une grandeur décrivant au moins indirectement le mode de fonctionnement ou d'exploitation de l'accouplement élastique est complètement intégré dans l'accouplement élastique (2) ;
1.3 le dispositif (6) pour acquérir au moins une grandeur décrivant au moins indirectement le mode d'exploitation de l'accouplement élastique comprend des moyens (15) pour capter les données d'exploitation et une interface (7) installée à demeure, comprenant des moyens (8) pour lire les grandeurs décrivant au moins indirectement le mode d'exploitation de l'accouplement élastique (2).

2. Amortisseur de vibrations torsionnelles selon la revendication 1, **caractérisé en ce que** les moyens (15) pour capter les données d'exploitation sont disposés de façon coaxiale à l'axe de rotation (R) de l'accouplement élastique (2).

3. Amortisseur de vibrations torsionnelles selon la revendication 2, **caractérisé en ce que** les moyens (15) pour capter les données sont disposés sur l'axe de rotation (R) de l'accouplement élastique (2).

4. Amortisseur de vibrations torsionnelles selon l'une des revendications 1 à 3, **caractérisé en ce que** les moyens (15) pour capter les données d'exploitation comprennent un transmetteur (30).

5. Amortisseur de vibrations torsionnelles selon la revendication 4, **caractérisé en ce que** les moyens (15) pour capter les données d'exploitation comprennent un capteur de vitesse de rotation (31).

6. Amortisseur de vibrations torsionnelles selon la revendication 4, **caractérisé en ce que** les moyens (15) pour capter le mode d'exploitation comprennent un capteur de force centrifuge.

7. Amortisseur de vibrations torsionnelles selon l'une des revendications 1 à 6, **caractérisé en ce que** le dispositif (6) présente un système portant (23) dans lequel les moyens (15) pour capter les données ou les grandeurs décrivant au moins indirectement le mode d'exploitation de l'accouplement élastique (2) sont intégrés et qui est relié de manière solidaire en rotation avec les moyens de couplage de suspension ou d'amortissement (5) et à l'un des éléments d'accouplement, le premier ou le deuxième élément d'accouplement (3, 4).

8. Amortisseur de vibrations torsionnelles selon la revendication 7, **caractérisé en ce que** le système portant (23) présente une partie de boîtier en forme de cloche (29) qui renferme les moyens (15) pour capter les grandeurs décrivant au moins indirectement le mode d'exploitation de l'accouplement élastique (2) et sur laquelle ceux-ci sont supportés et un élément en forme de disque qui couple la partie de boîtier en forme de cloche (29) à l'accouplement élastique (2), en particulier à l'un des deux éléments d'accouplement (3, 4).

9. Amortisseur de vibrations torsionnelles selon l'une des revendications 1 à 8, **caractérisé en ce que** les moyens (8) pour lire les grandeurs décrivant au moins indirectement le mode d'exploitation de l'accouplement élastique (2) comprennent un dispositif de connexion (16) pour le couplage de dispositifs de lecture externes.

10. Amortisseur de vibrations torsionnelles selon l'une des revendications 1 à 8, **caractérisé en ce que** le dispositif (6) pour l'acquisition d'au moins une grandeur décrivant au moins indirectement le mode d'exploitation de l'accouplement élastique comprend des moyens (10) pour la transmission des données.

11. Amortisseur de vibrations torsionnelles selon la revendication 10, **caractérisé en ce que** les moyens (10) pour la transmission des données font partie de l'interface (7).

12. Amortisseur de vibrations torsionnelles selon la revendication 10 ou 11, **caractérisé en ce que** les moyens (10) pour la transmission des données sont réalisés comme des moyens pour la transmission sans fil des données.

13. Amortisseur de vibrations torsionnelles selon la revendication 10, caractérisé en ce les moyens (10) pour la transmission sans fil des données comprennent au moins un dispositif émetteur (11).

14. Amortisseur de vibrations torsionnelles selon l'une des revendications 12 à 13, **caractérisé en ce que** les moyens (10) pour la transmission sans fil des données sont formés par un dispositif de télécommunication par radio (14).
